# EUROPÄISCHE PATENTSCHRIFT

(11) **EP 1 509 751 B1**
(45) Veröffentlichungstag und Bekanntmachung des Hinweises auf die Patenterteilung: **16.11.2005**
(21) Anmeldenummer: 03755156.1
(22) Anmeldetag: 28.05.2003
(51) Int. Cl.: G01G 21/28, G01G 23/30

(54) **WAAGE MIT WINDSCHUTZ**
WIND PROTECTED SCALES
BALANCE POURVUE D'UNE PROTECTION CONTRE LE VENT

(30) Priorität: 29.05.2002 EP 02100577
(43) Veröffentlichungstag der Anmeldung: 02.03.2005
(73) Patentinhaber: Mettler-Toledo GmbH, 8606 Greifensee (CH)
(72) Erfinder: ROTACH, Hansjörg, CH-8307 Effretikon (CH); LEISINGER, Roger, CH-8044 Zürich (CH); EMERY, Jean-Christophe, CH-8603 Scherzenbach (CH)
(86) Internationale Anmeldenummer: PCT/EP2003/050205
(87) Internationale Veröffentlichungsnummer: WO 2003/100361

(56) Entgegenhaltungen:
- CH-A- 677 029
- CH-A- 687 836
- DE-A- 3 741 313
- DE-A- 19 849 399
- DE-A- 19 948 754
- DE-U- 8 803 709
- DE-U- 29 912 867
- GB-A- 182 929
- US-A- 3 633 693
- US-A- 4 862 978
- "Bilancia analitica semimicro dual range mod. E/50S" GIBERTINI ELETTRONICA SRL, [Online] 3. Juli 2001 (2001-07-03), XP002254847 Gefunden im Internet: <URL:http://www.gibertini.com/php/schede/1 -1-3-IT.htm> [gefunden am 2003-08-29]

## Beschreibung

Die Erfindung betrifft eine Windschutzvorrichtung für eine Waage sowie eine mit dieser Vorrichtung versehene Waage.

Die Präzision einer Waage ist von verschiedenen Faktoren abhängig. Von Bedeutung sind Luftströmungen, die während einer Messung auf die im Wägeraum vorgesehene Waagschale einwirken. Zur Vermeidung störender Luftströmungen sind Waagen daher meist mit Vorrichtungen versehene, durch die der Wägeraum gegen Einwirkungen von Luftströmen geschützt wird.

Eine Windschutzvorrichtung dieser Art ist beispielsweise aus [1], Patentschrift CH-677 029 A5, bekannt. Die dort beschriebene Windschutzvorrichtung besteht aus vier oder mehr gelenkig miteinander verbundenen Teilwänden, von denen mindestens eine einen U-förmigen Rahmen aufweist, in den eine Platte oder Scheibe eingeschoben ist, die bei Bedarf, zum Einwägen oder Beschicken der Waage, entfernt werden kann. An der Oberkante der Teilwand, welche die Rückwand bildet, ist ferner ein Deckel angelenkt, mittels dessen der Wägeraum ebenfalls geöffnet werden kann.

Eine weitere, in [2], Patentschrift CH-687 836 A5, offenbarte Windschutzvorrichtung ist für Waagen vorgesehen, die einen Sockel mit einer damit verbundenen, feststehenden Rückwand und einer mittels Streben mit der Rückwand verbundenen Frontscheibe aufweisen. Ferner sind zwei, die Seitenwände bildende Schiebetüren vorgesehen, welche im Bereich der Vorderkanten Führungsmittel aufweisen, welche untere Längsführungen umgreifen.

Aus [3], Offenlegungsschrift DE 198 49 399 A1, ist eine Windschutzvorrichtung bekannt, die mittels einer Verriegelungsvorrichtung lösbar mit dem Sockel einer Waage verbindbar ist. Ferner erlaubt diese Vorrichtung ein einfaches Auswechseln von Windschutzscheiben, wodurch ein bequemes Reinigen der Vorrichtung ermöglicht wird.

Aus [4] und [5], Offenlegungsschriften DE 37 41 313 A1 und DE 199 48 754 A1, sind zudem Windschutzvorrichtungen mit motorisch betätigbaren Elementen bekannt.

Bei der in [4] beschriebenen Vorrichtung sind wenigstens zwei zylinderförmig gebogene Wandelemente vorgesehen, die zum Öffnen und Schliessen des Wägeraumes gegeneinander verschiebbar sind. Die aus [5] bekannte Vorrichtung weist wenigstens zwei Wandelemente auf, die unabhängig voneinander motorisch bewegbar sind.

In der Gebrauchmusterschrift DE 29 912 867 U1 [8] ist eine Waage mit Windschutzvorrichtung offenbart, welche einen eine Waagschale umgebenden Wägeraum umschliesst, wobei die Waage eine den Wägeraum nach einer Seite begrenzende Rückwand aufweist.

Bei all den beschriebenen Windschutzvorrichtungen sind die den Wägeraum umschliessenden Wände, insbesondere die Rückwand, entweder aus einem undurchsichtigen Material, beispielsweise aus Metall gefertigt oder sie bestehen aus durchsichtigem Material, vorzugsweise aus Glas.

Eine für das Umgebungslicht undurchlässige Wand kann jedoch den Wägeraum abdunkeln, wohingegen bei Verwendung einer durchsichtigen Glaswand Gegenstände, die sich häufig hinter der Waage befinden, den Blick des Benutzers auf sich ziehen und diesen vom eigentlichen Wägevorgang ablenken können.

Der vorliegenden Erfindung liegt daher die Aufgabe zugrunde, eine Waage einerseits hinsichtlich der Beleuchtung des Wägeraums zu optimieren und andererseits sie hinsichtlich der überflüssigen Wahrnehmung von ausserhalb der Waage angeordneten Gegenständen ergonomisch zu verbessern.

Diese Aufgabe wird mit einer Waage gemäss den Merkmalen des unabhängigen Anspruchs 1 gelöst.

Eine mit einer Windschutzvorrichtung versehene Waage, die einen die Waagschale umgebenden Wägeraum umschliesst, weist eine den Wägeraum nach einer Seite begrenzende Rückwand auf, welche aus einem das Umgebungslicht diffus transmittierenden Material, insbesondere aus Mattglas gefertigt ist.

Der Vorteil einer solchen Anordnung besteht darin, dass einerseits der Wägeraum von allen Seiten, insbesondere von hinten ausgeleuchtet werden kann, beziehungsweise das Umgebungslicht den Wägeraum durchfluten kann, andererseits jedoch hinter der Rückwand vorgesehene Teile der Waage nicht störend in Erscheinung treten.

Eine solche Waage weist einen Wägeraumboden auf, welcher in bevorzugter Weise von der Oberseite des Waagengehäuses gebildet wird, und die Rückwand steht vorzugsweise annähernd senkrecht auf dem Wägeraumboden.

In einer bevorzugten Ausführungsform ist eine solche Rückwand mit einer Anzeige, insbesondere einer hintergrundbeleuchteten Flüssigkristallanzeige versehen. Dies erlaubt dem Anwender gleichzeitig auf die Waagschale beziehungsweise das Wägegut und die Anzeige zu blicken. Auch die Anordnung einer Beleuchtungsvorrichtung zur Beleuchtung der Rückwand von hinten kann vorgesehen werden.

Insbesondere kann die Erfindung dadurch ausgeführt werden, dass die Rückwand abnehmbar und gegen eine andere Rückwand auswechselbar ausgestaltet ist.

In einer besonders vorteilhaften Ausgestaltung der Erfindung weist die Windschutzvorrichtung der Waage einen den Wägeraum teilweise umfassenden, aus mindestens zwei flächigen Elementen bestehenden, windabweisenden Körper auf. Der Körper ist lose handhabbar in wenigstens zwei verschiedenen Stellungen positionierbar, in denen je wenigstens eine Öffnung für den Zugriff in den Wägeraum geschaffen wird, wobei die resultierenden Öffnungen einen Zugriff in den Wägeraum aus unterschiedlichen Richtungen erlauben.

Die anhand des Körpers geschaffenen Öffnungen, durch die der Zugriff in den Wägeraum erfolgt, sind vorzugsweise durch weitere dreh- oder verschiebbare, windabweisende Elemente, beispielsweise Türelemente oder einen gegebenenfalls an der Rückwand angelenkten Deckel ganz oder teilweise verschliessbar. Die windabweisenden Elemente können dabei fest installiert oder durch den Anwender bei Bedarf montierbar sein. Insbesondere ist es zweckmässig, wenn der Körper in dessen Stellungen an das Gehäuse der Waage, den Sockel und/oder die Rückwand und/oder den Deckel angepasst ist.

Die gegebenenfalls motorisch angetriebenen dreh- oder verschiebbaren windabweisenden Elemente sind bei Nichtgebrauch vorzugsweise innerhalb einer mit der Rückwand verbundenen Kammer deponierbar. In einer bevorzugten Ausgestaltung ist der Körper faltbar und ebenfalls innerhalb der Kammer deponierbar.

Nachfolgend wird die Erfindung anhand von Zeichnungen näher erläutert. Dabei zeigt:
- Figur 1: eine erste Ausgestaltung einer Waage, in dreidimensionaler Darstellung
- Figur 2: eine zweite Ausgestaltung einer Waage, in dreidimensionaler Darstellung
- Figur 3: die Waage aus Figur 1, ohne den Körper, jedoch mit montierten Türelementen, wobei die Rückwand mit einer Anzeige versehen ist,
- Figur 4: die Waage aus Figur 1, wobei die Vorderwand mit einer Anzeige versehen ist.

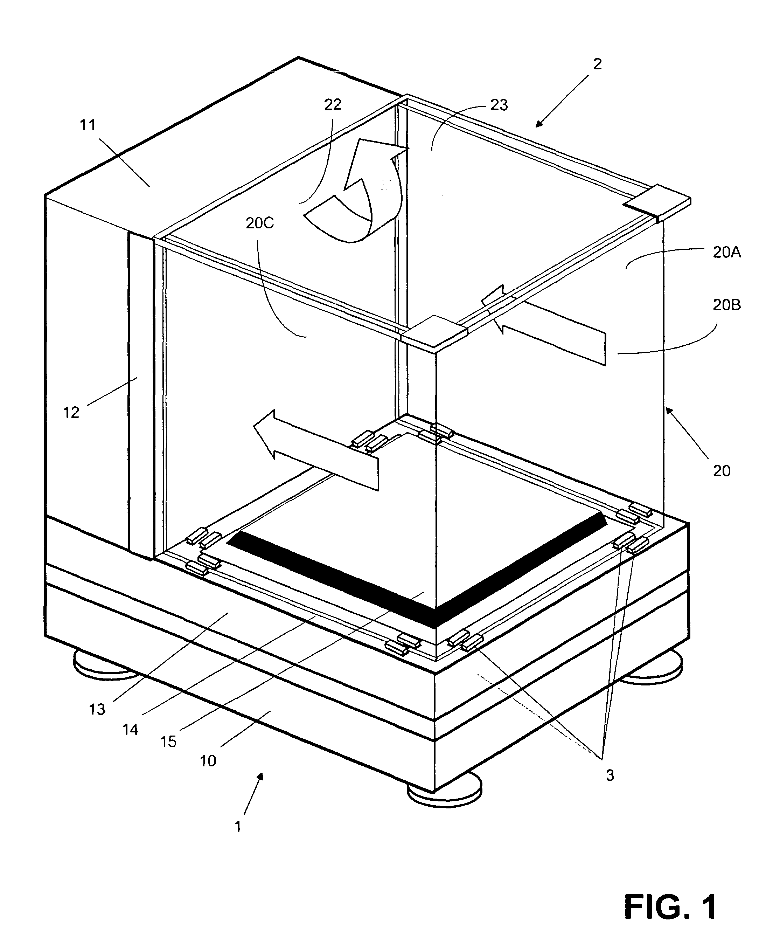

Figur 1 zeigt eine mit einer Windschutzvorrichtung 2 versehene Waage 1, deren Wägeraum unten durch einen die Oberseite eines Sockels 13 bildenden Wägeraumboden 14, oben durch einen Deckel 23, hinten durch eine Rückwand 22 und vom sowie seitlich durch einen U-profilförmigen Körper 20 begrenzt wird. Der U-profilförmige Körper 20, der Deckel 23, der Wägeraumboden 14 und die Rückwand 22 sind in ihrer Grösse aneinander angepasst, so dass dadurch der Wägeraum vollständig abgeschlossen wird. Zum Einwägen oder Beschicken der Waage 1 in der in Figur 1 gewählten Stellung des Körpers 20 ist daher der Deckel 23 anzuheben, wonach der Wägeraum von oben zugänglich ist.

Der auf dem Sockel 13 ruhende U-profilförmige Körper 20 weist drei flächige Elemente 20A, 20B, 20C auf, zwei gegen die Rückwand 22 gerichtete Schenkel 20A, 20C, welche durch ein den Wägeraum frontseitig begrenzendes Mittelstück 20B miteinander verbunden sind. Die Schenkel 20A, 20C und das Mittelstück 20B sind mittels Nocken 3, die auf dem Wägeraumboden 14 angeordnet sind, beidseitig gehalten.

Wie aus der Figur 1 ersichtlich, ist ferner ein die hier nicht sichtbare Wägezelle und die Wägeelektronik enthaltendes Waagengehäuse 10 vorhanden. Der Sockel 13, welcher eine Durchführung für den Durchtritt des die Waagschale 15 mit der Wägezelle verbindenden Lastübertragungsglieds (hier ebenfalls nicht sichtbar) besitzt, ist hier oberhalb des Waagengehäuses 10 angeordnet. Er kann mit dem Waagengehäuse 10 mittels Halterungen verbunden sein oder auch in das Waagengehäuse 10 integriert sein. Der Sockel 13, der vorwiegend als Auflage für den windabweisenden Körper 20 dient, kann jedoch auch unterhalb des Waagengehäuses angeordnet sein, beispielsweise als Stellfläche für die Waage 1 einerseits und andererseits als Auflage für den windabweisenden Körper 20 dienend.

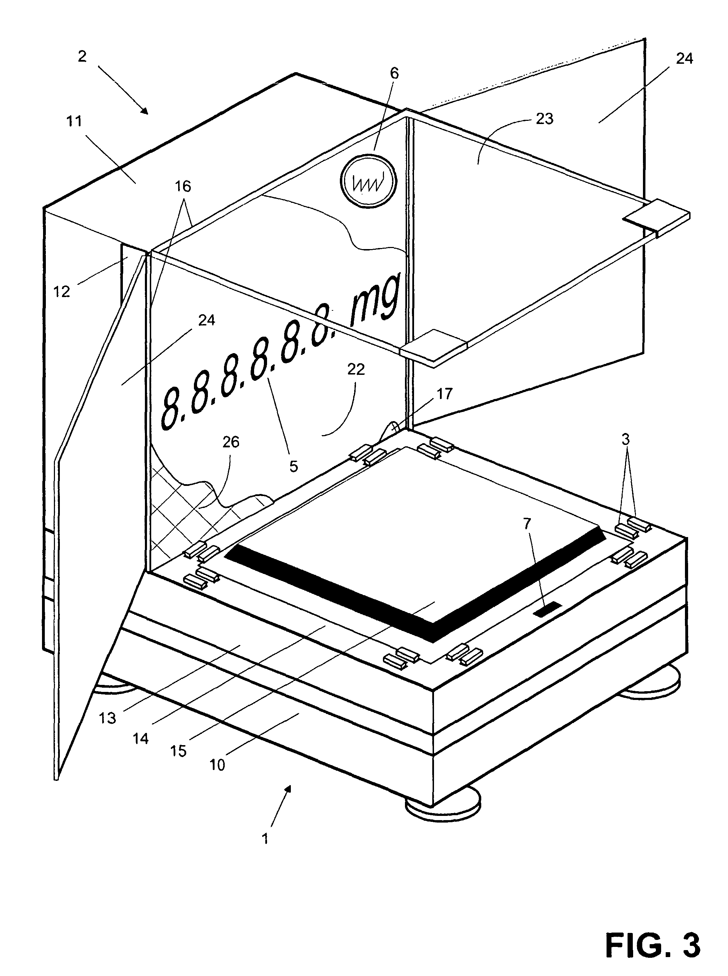

Aus Figur 1 ist ferner ersichtlich, dass der auf dem Gehäuse 10 der Waage 1 angeordnete Sockel 13 eine im rückwärtigen Teil der Waage 1 stehende Kammer 11 trägt. Innerhalb der Kammer 11 können beispielsweise elektronische Module oder, wie weiter unten in Figur 3 gezeigt wird, eine Beleuchtungsvorrichtung vorgesehen sein, welche die einen Teil der Kammer 11 bildende Rückwand 22 des Wägeraums beleuchtet. Die Kammer 11 ist ferner mit einem vorzugsweise verschliessbaren Zugang 12 versehen, durch den Teile der Windschutzvorrichtung 2 und/oder der gegebenenfalls faltbare Körper 20 in die Kammer 11 einführbar und dort deponierbar sind. Der Zugang 12 kann seitlich an der Kammer oder oberhalb derselben angebracht sein und kann in letzterem Fall zum Öffnen und Schliessen mit dem Deckel 23 verbunden sein.

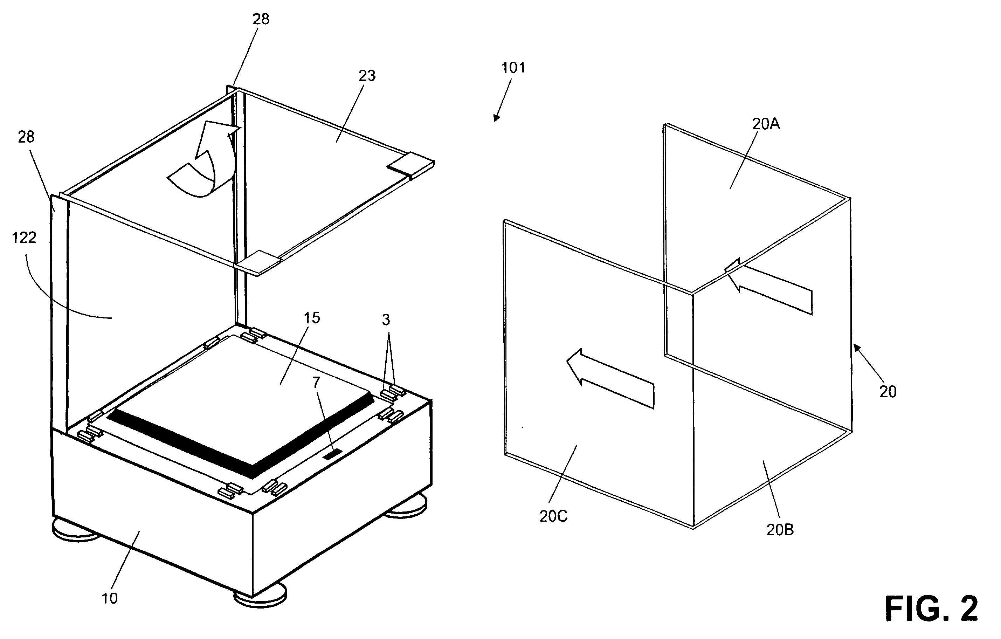

Die Figur 2 zeigt eine Ausgestaltung der Waage 101, bei welcher auf die Kammer 11, wie sie in Figur 1 dargestellt ist, verzichtet wurde. Der Übersichtlichkeit halber wurde der Körper 20 von der Waage 101 getrennt gezeichnet. Die Rückwand 122 ist aus einem das Licht diffus transmittierenden Material, vorzugsweise aus Mattglas gefertigt. Sie befindet sich zwischen zwei stehend angeordneten Leisten 28 und wird von diesen gehalten. Die Rückwand 122 kann nun nach oben aus den Leisten 28 herausgezogen werden und gegebenenfalls gegen eine andere, beispielsweise eine durchsichtige, aus Glas gefertigte Rückwand oder eine undurchsichtige, aus Metall gefertigte Rückwand ersetzt werden. Selbstverständlich kann die Rückwand 122 auch direkt am Waagengehäuse 10 befestigt oder in einer Führung gelagert sein. Die in der Figur 2 dargestellte Waage besitzt keinen Sockel, vielmehr dient die Oberseite des Wagengehäuses 10 als Auflagefläche für den Körper 20 welcher, wie vorstehend beschrieben, in den verschiedensten Stellungen positioniert werden kann.

Figur 3 zeigt eine Waage 1 ohne den U-profilförmigen Körper 20, welcher beispielsweise zur Reinigung des Wägeraums entfernt wurde. Zusätzlich oder alternativ zum U-profilförmigen Körper 20 können Türelemente 24 montiert werden, die gelenkig, beispielsweise mittels eines Scharniers 16, mit der Rückwand 22 verbunden sind. Ebenso kann der Deckel 23, wie in der Figur gezeigt, mit einem Scharnier 16 an der Rückwand 22 angelenkt sein.

In der in Figur 3 gezeigten Ausgestaltung ist die Rückwand 22 ebenfalls aus einem das Umgebungslicht diffus transmittierenden Material 26, beispielsweise aus Mattglas, gefertigt, so dass der Wägeraum von hinten gleichmässig ausgeleuchtet wird. Von Vorteil ist hierbei die Lichtdurchflutung des Wägeraums einerseits und andererseits, dass gegebenenfalls hinter der Rückwand 22 vorgesehene Vorrichtungsteile, beispielsweise elektrische Module oder Kabel, nicht störend in Erscheinung treten.

Weiterhin ist die Rückwand 22 an ihrem unteren Rand mit einer Öffnung 17 versehen, die der Durchführung von elektrischen Kabeln oder sonstigen Zuleitungen dient, an die beispielsweise im Wägeraum zu verwendende Vorrichtungen anschliessbar sind. Der Zugang zum Wägeraum durch die Kabeldurchführungsöffnung 17 kann insbesondere dadurch erleichtert werden, dass die Rückwand 22 abnehmbar ausgestaltet ist, wie bereits anhand der Figur 2 beschrieben wurde. Auch ist eine Anordnung einer oder mehrerer Kabeldurchführungsöffnungen 17, welche sich an einem seitlichen oder dem oberen Rand der Rückwand 22 befinden, denkbar.

Die Rückwand 22 ist ferner mit einer Anzeige 5, beispielsweise einer hintergrundbeleuchteten Flüssigkristallanzeige versehen, was in Kombination mit der erfindungsgemässen Windschutzvorrichtung 2 besonders vorteilhaft ist. Die in der Rückwand 22 vorgesehene Anzeige 5 kann beispielsweise das Wägeresultat ausgeben. Der Wägevorgang ist daher bequem durchführbar, da sich sowohl die Anzeige 5, als auch die Waagschale 15 mit dem Wägegut etwa gleichzeitig im Blickfeld des Anwenders befinden.

LCD- und LED-Anzeigen sowie deren Beschaltung sind beispielsweise in [6], Mool C. Gupta, Handbook of Photonics, CRC Press, Boca Raton 1997, Seiten 782 - 793 und [7], U. Tietze, Ch. Schenk, Halbleiterschaltungstechnik, 11. Auflage, 1. Nachdruck, Springer Verlag, Berlin 1999, Seiten 1126 - 1129 und 1307-1308 beschrieben.

Wie in Figur 3 gezeigt, können ferner Sensoren 7, beispielsweise Schalter oder optoelektronische Bauelemente, vorgesehen sein, mittels derer die gewählte Stellung des in den Figuren 1 und 2 dargestellten Körpers 20, und/oder, sofern mehrere Körper 20, vorgesehen sind, der jeweils installierte Körper 20 detektierbar ist. Die gegebenenfalls steuerbaren Elemente der Waage 1, motorisch angetriebene windabweisende Elemente, beispielsweise der Deckel 23 oder die Türelemente 24, die Beleuchtungsvorrichtung 6 oder die Anzeige 5 sind daher entsprechend der gewählten Stellung des Körpers 20 betätigbar, so dass ein optimaler Bedienungskomfort für den Anwender resultiert. Optoelektronische Bauelemente, die als Sensoren bzw. Photodetektoren verwendbar sind, sind beispielsweise in [6], Seiten 301-302 und [7], Seiten 1299-1306 beschrieben.

Sofern die Windschutzvorrichtung 2 nicht benötigt wird, können deren Bestandteile, d.h. der U-profilförmige Körper 20, der Deckel 23 und die Türelemente 24, entfernt werden, was mit wenigen Handgriffen möglich ist, und wie oben bereits erwähnt, zumindest teilweise, in der Kammer 11 untergebracht werden. Um die Lichtdurchflutung des Wägeraums weiterhin zu gewährleisten, ist es vorteilhaft, wenn die die Kammer 11 nach aussen begrenzende zweite Kammerwand (in der Figur nicht sichtbar) ebenfalls aus Mattglas gefertigt ist, wobei allerdings auch ebenso die Verwendung von transparentem Glas möglich ist.

Die flächigen Elemente 20A, 20B, 20C des Körpers 20 können verschiedene Formen aufweisen und aus verschiedenartigen durchsichtigen und/oder opaken und/oder das Licht diffus transmittierenden Materialien, wie Glas, Mattglas Kunststoff und/oder Metall gefertigt sein. Möglich ist beispielsweise auch die Verwendung von mit Glas- oder Kunststoffplatten bestückten Metallrahmen oder Eckprofilen. Die flächigen Elemente 20A, 20B, 20C sind vorzugsweise eben, können aber auch mit Krümmungen versehene Formen aufweisen.

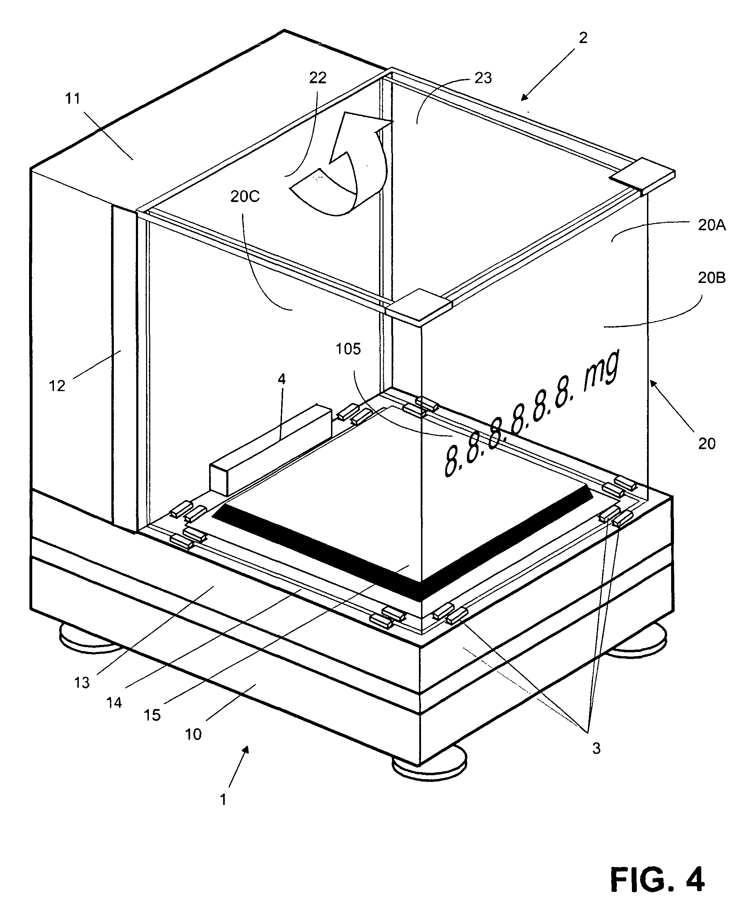

Die Figur 4 zeigt die Waage 1 aus Figur 1 in einer Anordnung mit einer Anzeige 105 auf der Frontscheibe 20B der Waage 1. Eine solche Anzeige 105 kann entweder in Form einer Projektion realisiert werden, wobei die Frontscheibe 20B allerdings zur Sichtbarmachung zumindest in einem Bereich ein gewisses Streuvermögen für Licht aufweisen muss, jedoch gleichzeitig noch derart durchsichtig sein muss, dass ein Blick auf die Waagschale 15 noch gut möglich ist. Eine Projektionsvorrichtung 4 kann hierfür im Wägeraum nahe der Rückwand 22 oder hinter der Rückwand 22 angeordnet sein. Insbesondere könnte eine solche Projektionsvorrichtung derart ausgestaltet sein, dass von der Bedienperson die Projektion hinsichtlich der Schärfe der Abbildung, wie auch der Ort, insbesondere die Höhe der Projektion, variiert werden können.

Alternativ kann, zumindest in einem Bereich, die Frontscheibe als transparente Flüssigkristallanzeige ausgestaltet sein, das heisst eine Flüssigkristallzelle mit transparenten Elektroden enthalten, welche derart angesteuert wird, dass sie laufend das Wägeergebnis ausgibt. Eine solche Ausführungsform der Anzeige ist besonders für eine Waage mit feststehender Frontwand geeignet.

Somit ist ein Benutzer der Waage in der Lage, beispielsweise gleichzeitig den Vorgang der Zugabe von Wägegut in ein sich auf der Waagschale 15 befindliches Messgefäss zu beobachten und das sich dadurch ändemde Wägeergebnis anhand der Anzeige 105 zu verfolgen, ohne den Blick zwischen zwei Positionen, nämlich der Waagschale und einer Anzeige- und Bedieneinheit wechseln zu müssen.

Die erfindungsgemässe Windschutzvorrichtung wurde in bevorzugten Ausgestaltungen beschrieben und dargestellt. Anhand der erfindungsgemässen Lehre sind jedoch weitere fachmännische Ausgestaltungen realisierbar. Insbesondere sind verschiedene Formen und Materialien zur Gestaltung des oder der verwendeten Körper möglich. Weiterhin kann selbstverständlich auch das Gehäuse der Waage eine andere Form aufweisen.

### Bezugszeichenliste

- 1, 101: Waage
- 2: Windschutzvorrichtung
- 3: Befestigungsmittel
- 4: Projektionsvorrichtung
- 5, 105: Anzeige
- 6: Beleuchtungsvorrichtung
- 7: Sensor
- 10: Gehäuse
- 11: Kammer
- 12: Zugang zu der Kammer 11
- 13: Sockel
- 14: Wägeraumboden
- 15: Waagschale
- 16: Scharnier
- 17: Kabeldurchführungsöffnung
- 20: Körper
- 20A, 20B, 20C: Elemente des Körpers 20
- 22,122: Rückwand
- 23: Deckel
- 24: Türelemente
- 26: Rückwandmaterial
- 28: Leisten

### Literaturverzeichnis

[1] Patentschrift CH-677 029 A5
[2] Patentschrift CH-687 836 A5
[3] Offenlegungsschrift DE 198 49 399 A1
[4] Offenlegungsschrift DE 37 41 313 A1
[5] Offenlegungsschrift DE 199 48 754 A1
[6] Mool C. Gupta, Handbook of Photonics, CRC Press, Boca Raton 1997
[7] U. Tietze, Ch. Schenk, Halbleiterschaltungstechnik, 11. Auflage, 1. Nachdruck, Springer Verlag, Berlin 1999
[8] Gebrauchmusterschrift DE 29 912 867 U1

## Patentansprüche

1. Waage (1, 101) mit einer Windschutzvorrichtung (2), welche einen eine Waagschale (15) umgebenden Wägeraum umschliesst, wobei die Waage (1, 101) eine den Wägeraum nach einer Seite begrenzende Rückwand (22, 122) aufweist, **dadurch gekennzeichnet, dass** die Rückwand aus einem das Umgebungslicht diffus transmittierenden Material (26), insbesondere aus Mattglas gefertigt ist.

2. Waage nach Anspruch 1, **dadurch gekennzeichnet, dass** der Wägeraum einen Wägeraumboden (14) aufweist und die Rückwand (22, 122) im wesentlichen senkrecht auf dem Boden (14) des Wägeraums stehend angeordnet ist.

3. Waage nach Anspruch 2, **dadurch gekennzeichnet, dass** die Waage (1, 101) ein Waagengehäuse (10) aufweist, dessen Oberseite den Wägeraumboden (14) bildet.

4. Waage nach Anspruch 1, 2 oder 3, **dadurch gekennzeichnet, dass** eine Beleuchtungsvorrichtung (6) vorhanden ist, zur Beleuchtung der Rückwand (22, 122).

5. Waage nach einem der Ansprüche 1 bis 4, **dadurch gekennzeichnet, dass** die Rückwand (22, 122) mit einer Anzeige (5), insbesondere mit einer hintergrundbeleuchteten Flüssigkristallanzeige versehen ist.

6. Waage nach einem der Ansprüche 1 bis 5, **dadurch gekennzeichnet, dass** die Rückwand (22, 122) abnehmbar und gegen eine andere Rückwand auswechselbar ausgestaltet ist.

7. Waage nach einem der Ansprüche 1 bis 6, mit einem den Wägeraum teilweise umfassenden, aus mindestens zwei flächigen Elementen (20A, 20B, 20C) bestehenden, windabweisenden Körper (20), **dadurch gekennzeichnet, dass** der Körper (20) lose handhabbar in wenigstens zwei verschiedenen Stellungen positionierbar ist, in denen je wenigstens eine Öffnung für den Zugriff in den Wägeraum geschaffen wird, wobei die resultierenden Öffnungen einen Zugriff in den Wägeraum aus unterschiedlichen Richtungen erlauben.

8. Waage nach einem der Ansprüche 1 bis 7, **dadurch gekennzeichnet, dass** ein an der Rückwand (22, 122) angelenkter Deckel (23) vorgesehen ist.

9. Waage nach einem Anspruch 7 oder 8, **dadurch gekennzeichnet, dass** weitere dreh- oder verschiebbare windabweisende Elemente, insbesondere Türelemente (24) vorgesehen oder montierbar sind, mittels derer weitere Öffnungen zum Wägeraum ganz oder teilweise verschliessbar sind.

10. Waage nach Anspruch 7, 8 oder 9, **dadurch gekennzeichnet, dass** die Rückwand (22) mit einer Kammer (11) verbunden ist und dass der windabweisende Körper (20) faltbar ist, wobei die dreh- oder verschiebbaren windabweisenden Elemente (23; 24) und/oder der faltbare Körper (20) innerhalb der Kammer (11) deponierbar sind.

11. Waage nach einem der Ansprüche 7 bis 10, **dadurch gekennzeichnet, dass** einer oder mehrere Sensoren (7), Schalter oder optoelektronische Bauelemente vorgesehen sind, mittels derer die gewählte Stellung des Körpers (20) und/oder der Körper (20) selbst detektierbar ist.

12. Waage nach einem der Ansprüche 1 bis 11, **dadurch gekennzeichnet, dass** eine Anzeige (105) an die Frontscheibe (20B) projizierbar ist oder mittels einer in die Frontscheibe integrierten Flüssigkristallanzeige erzeugt werden kann.

## Claims

1. Balance (1, 101) with a draft protection device (2) that encloses a weighing compartment surrounding a balance pan (15), wherein the balance (1, 101) comprises a rear wall (22, 122) delimiting the weighing compartment on one side, **characterized in that** said rear wall is made of a material (26) that diffuses the transmitted ambient light, in particular of frosted glass.

2. Balance according to claim 1, **characterized in that** the weighing compartment has a weighing compartment floor (14) and the rear wall (22, 122) is arranged to stand substantially vertical on the weighing compartment floor (14).

3. Balance according to claim 2, **characterized in that** the balance (1, 101) comprises a balance housing (10) having a topside that forms the weighing compartment floor (14).

4. Balance according to one of the claims 1, 2 or 3, **characterized in that** an illumination device (6) is provided for illuminating the rear wall (22, 122).

5. Balance according to one of the claims 1 to 4, **characterized in that** the rear wall (22, 122) is equipped with a display (5) in particular a backlit liquid crystal display.

6. Balance according to one of the claims 1 to 5, **characterized in that** the rear wall (22, 122) is removable and interchangeable against another rear wall.

7. Balance according to one of the claims 1 to 6, with a wind-blocking body (20) consisting of at least two panel elements (20A, 20B, 20C) reaching partially around the weighing compartment, **characterized in that** the body (20) can be selectively positioned by hand in at least two different orientations, that in each of the differently oriented positions at least one opening is made available for access to the weighing compartment, and that the respective openings resulting from the different positions make the weighing compartment accessible from different directions.

8. Balance according to one of the claims 1 to 7, **characterized in that** a lid (23) is provided which is hinged on the rear wall (22, 122).

9. Balance according to one of the claims 7 or 8, **characterized in that** further swiveling or sliding wind-blocking elements are provided or can be installed, in particular door elements (24), by means of which further openings into the weighing compartment can be entirely or partially closed.

10. Balance according to claim 7, 8 or 9, **characterized in that** the rear wall (22) is connected to a chamber (11) and that the wind-blocking body (20) is foldable, wherein the swiveling or sliding wind-blocking elements (23; 24) and/or the foldable body (20) can be stored inside the chamber (11).

11. Balance according to one of the claims 7 to 10, **characterized in that** one or more sensors (7), switches, or opto-electronic components are provided by means of which the selected position of the body (20) and/or the presence of the body (20) can be detected.

12. Balance according to one of the claims 1 to 11, **characterized in that** a display (105) can be projected onto the front wall panel (20B) or can be generated by means of a liquid crystal display device that is integrated in the front wall panel.

## Revendications

1. Balance (1, 101) avec un dispositif pare brise (2) enfermant un espace de pesée entourant un plateau de pesée (15), la balance (1, 101) présentant une paroi arrière (22, 122) délimitant l'espace de pesée sur un côté, **caractérisée en ce que** la paroi arrière est réalisée dans un matériau (26) transmettant la lumière ambiante de manière diffuse, en particulier en verre dépoli.

2. Balance selon la revendication 1, **caractérisée en ce que** l'espace de pesée présente un fond d'espace de pesée (14) et **en ce que** la paroi arrière (22, 122) est disposée debout de manière sensiblement verticale sur le fond (14) de l'espace de pesée.

3. Balance selon la revendication 2, **caractérisée en ce que** la balance (1, 101) présente un boîtier de balance (10) dont la face supérieure forme le fond (14) de l'espace de pesée.

4. Balance selon la revendication 1, 2 ou 3, **caractérisée en ce qu'**il existe un dispositif d'éclairage (6) pour éclairer la paroi arrière (22, 122).

5. Balance selon l'une des revendications 1 à 4, **caractérisée en ce que** la paroi arrière (22, 122) est pourvue d'un affichage (5), notamment d'un affichage à cristaux liquides rétroéclairé.

6. Balance selon l'une des revendications 1 à 5, **caractérisée en ce que** la paroi arrière (22, 122) est conçue de manière à pouvoir être retirée et remplacée par une autre paroi arrière.

7. Balance selon l'une des revendications 1 à 6, avec un corps arrêtant le vent (20) entourant partiellement l'espace de pesée et composé d'au moins deux éléments minces (20A, 20B, 20C), **caractérisée en ce que** le corps (20) peut être manipulé librement pour être positionné en au moins deux positions différentes, dans lesquelles est créée à chaque fois au moins une ouverture pour l'accès à l'espace de pesée, les ouvertures en résultant permettant un accès dans l'espace de pesée des différentes directions.

8. Balance selon l'une des revendications 1 à 7, **caractérisée en ce qu'**un couvercle (23) articulé sur la paroi arrière (22, 122) est prévu.

9. Balance selon l'une des revendications 7 ou 8, **caractérisée en ce que** d'autres éléments pivotants ou coulissants qui arrêtent le vent, notamment des éléments portes (24), sont prévus ou peuvent être montés, au moyen desquels d'autres ouvertures vers l'espace de pesée peuvent être fermées en totalité ou en partie.

10. Balance selon la revendication 7, 8 ou 9, **caractérisée en ce que** la paroi arrière (22) est reliée à une chambre (11) et **en ce que** le corps qui arrête le vent (20) est pliable, les éléments pivotants ou coulissants qui arrêtent le vent (23 ; 24) et/ou le corps pliable (20) pouvant être rangés à l'intérieur de la chambre (11).

11. Balance selon l'une des revendications 7 à 10, **caractérisée en ce qu'**un ou plusieurs capteurs (7), commutateurs ou composants opto-électroniques sont prévus, au moyen desquels la position sélectionnée du corps (20) et/ou des corps (20) peut être détectée de manière autonome.

12. Balance selon l'une des revendications 1 à 11, **caractérisée en ce qu'**un affichage (105) peut être projeté sur la vitre avant (20B) ou peut être généré sur celle-ci au moyen d'un affichage à cristaux liquides intégré dans la vitre avant.
